# EUROPEAN PATENT APPLICATION

(11) **EP 4 797 133 A1**
(43) Date of publication of application: **26.08.2026**
(21) Application number: 25227088.9
(22) Date of filing: 23.12.2025
(51) Int. Cl.: G06F 21/60, G06F 21/62, H04L 9/40

(54) **SECURING A DATA LAKE USING ARTIFACT-LEVEL SECURITY**

(30) Priority: 19.02.2025 US 202519057413
(71) Applicant: Microsoft Technology Licensing, LLC, Redmond, WA 98052 (US)
(72) Inventor: RAO, RAVI RANGANATHA, Redmond 98052 (US); KUMAR, PARAS, Redmond 98052 (US); MERRILL, AARON JOSEPH, Redmond 98052 (US); NETZ, AMIR MORDECHAI, Redmond 98052 (US); PETCULESCU, CRISTIAN, Redmond 98052 (US); MUTHUKRISHNAN, SARAVANAN, Redmond 98052 (US); VERMA, RAJAN, Redmond 98052 (US); KUPPA, VAMSI MOHAN, Redmond 98052 (US); BENCIC, ANTON, Redmond 98052 (US); CAPLAN, JOSHUA CHAIT, Redmond 98052 (US); SRINIVASAN, KANNAPIRAN, Redmond 98052 (US); DUMITRU, MARIUS, Redmond 98052 (US)
(74) Representative: CMS Cameron McKenna Nabarro Olswang LLP

(57) **Abstract**

Methods, apparatuses, and products for securing a data lake using artifact-level security, including: storing, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receiving, by the data lake, a request to access a particular data artifact of the plurality of data artifacts; and controlling access to the particular data artifact using the artifact-level security data for the particular data artifact.

## Description

### BACKGROUND

Data analytics platforms are used to access, manage, and analyze data for various purposes including business intelligence, real-time analytics, and data science using analytics engines. Data lakes are used in the data analytics platform to provide a centralized repository for storing data accessible to these data analytics engines. Certain users of the data analytics platforms should not have access to certain data stored in the data lake. Accordingly, access controls are used to restrict what data is accessible to which users by defining permissions for users or groups or users to access some data.

Existing data lake implementations offer limited access control features, instead relying on downstream entities such as the analytics engines or front-end applications to enforce data access controls. As the data lake is a centralized repository for potentially multiple analytics engines, this may necessitate defining access permissions for the same data multiple times across different analytics engines or applications. Moreover, where these different analytics engines or applications use different methodologies for implementing access controls, the same permissions may need to be defined or enforced using multiple, different methodologies.

In these implementations, defining access permissions for the same data multiple times increases the overall amount of user effort required to secure data. Moreover, this presents the risk of inconsistent access permissions across analytics engines or applications. This may allow a user to access data that they should not otherwise have access to, posing potential security risks, or may lead to inconsistent results when attempting to access some data set using different analytics engines or applications.

### SUMMARY

According to embodiments of the present disclosure, various methods, apparatus, and products for securing a data lake using artifact-level security are described herein. In some aspects, securing a data lake using artifact-level security includes: storing, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receiving, by the data lake, a request to access a particular data artifact of the plurality of data artifacts; and controlling access to the particular data artifact using the artifact-level security data for the particular data artifact. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for securing a data lake using artifact-level security in accordance with some embodiments.
Fig. 2 sets forth a flow chart illustrating an example method of securing a data lake using artifact-level security in accordance with some embodiments.
Fig. 3 sets forth a flow chart illustrating an additional example method of securing a data lake using artifact-level security in accordance with some embodiments.
Fig. 4 sets forth a flow chart illustrating an additional example method of securing a data lake using artifact-level security in accordance with some embodiments.
Fig. 5 sets forth a flow chart illustrating an additional example method of securing a data lake using artifact-level security in accordance with some embodiments.
Fig. 6 sets forth a flow chart illustrating an additional example method of securing a data lake using artifact-level security in accordance with some embodiments.
Fig. 7 sets forth a flow chart illustrating an additional example method of securing a data lake using artifact-level security in accordance with some embodiments.
Fig. 8 sets forth a flow chart illustrating an additional example method of securing a data lake using artifact-level security in accordance with some embodiments.
Fig. 9 illustrates an exemplary computing device that may be specifically configured to perform one or more of the processes described in the present disclosure.
Fig. 10 sets forth a block diagram of a cloud service provider service architecture in accordance with some embodiments of the present disclosure.

### DESCRIPTION OF EMBODIMENTS

Data analytics platforms are used to access, manage, and analyze data for various purposes including business intelligence, real-time analytics, and data science. To perform these functions, the data analytics platforms may support multiple, different analytics engines to analyze, transform, and otherwise process data. The data analytics platform may also use a data lake as a centralized data repository accessible to the different analytics engines.

Existing implementations of data lakes provide limited security features to control how data can be accessed from the data lake. In these implementations, data security and access control are largely deferred to the data analytics platforms or applications that access these data analytics platforms. This may result in inconsistencies where a user may have different permissions to access a given data artifact across different data analytics engines. In some other existing implementations, data artifacts may be duplicated into different silos, such as for access by different organizations. This may also result in inconsistencies in the permissions across each copy of the same data artifact. This may unintentionally expose some data to unauthorized users or may unintentionally restrict access to some data to otherwise authorized users.

To address these shortcomings, the approaches set forth herein describe approaches for artifact-level security for data artifacts in a data lake. Particular permissions for accessing data artifacts are defined in the data artifacts themselves as artifact-level security data. This ensures that permissions to access these data artifacts remain consistent across any analytics engine that may access them. Workloads for the different data analytics may be classified as trusted or untrusted workloads. Access by untrusted workloads may be enforced in the data lake itself while access by trusted workloads may be deferred to the workloads themselves using the artifact-level security data. In order to reduce data duplication in the data lake, shortcuts may be used to reference a data artifact rather than duplicate the data artifact. The permissions for the referenced data artifact can be used when accessing the shortcut, preventing possible inconsistencies across multiple copies of data artifacts.

Data security is essential in data analytics platforms. Inconsistent permissions for accessing data may result in unintended data exposure or inconsistent results when accessing data using different analytics engines. This may deter adoption of the data analytics platform, leading to potential revenue loss, and may cause legal or regulatory challenges due to unintentional data exposure. The approaches set forth herein ensure consistent data access security across all analytics engines, improving overall security and user satisfaction, thereby increasing overall adoption and revenue.

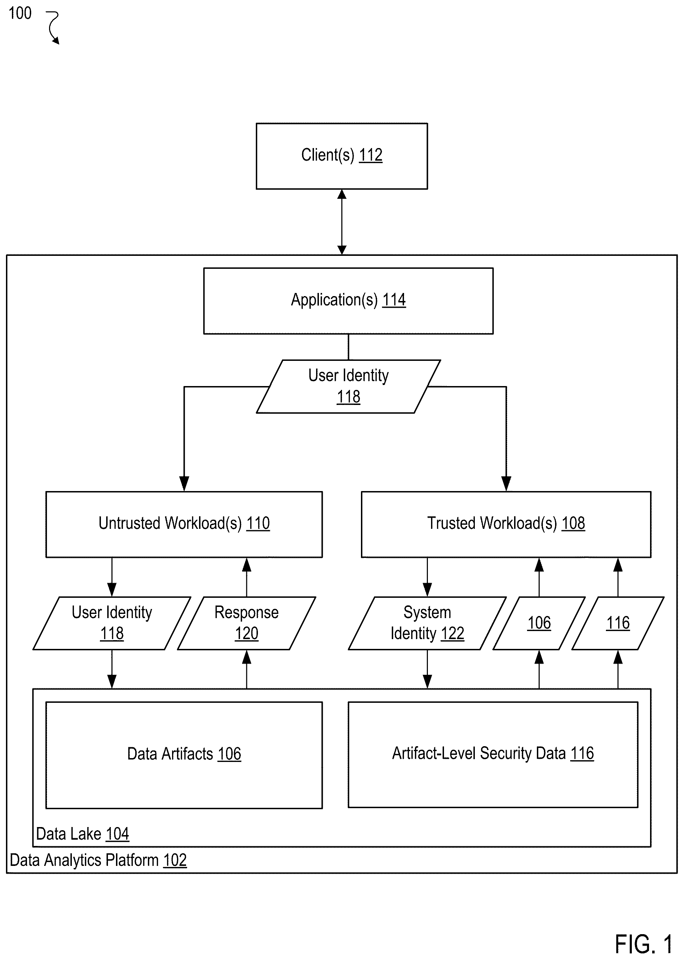

To begin, Fig. 1 sets forth a diagram of an example system 100 for securing a data lake using artifact-level security in accordance with some embodiments of the present disclosure. The system 100 includes a data analytics platform 102. The data analytics platform 102 is a computing system for analyzing large amounts of data. The data analytics platform 102 may include cloud-based computing systems, on-premises computing systems, or combinations thereof. To facilitate these operations, the data analytics platform 102 includes a data lake 104. The data lake 104 is a data repository for storing data in its raw or natural format. The data lake 104 may be used to store data including structured data such as structured data from relational databases (rows and columns), semi-structured data (comma-separated value (CSV) files, logs, JavaScript Object Notation (JSON)), unstructured data (emails, documents, PDFs), binary data (images, audio, video), or other data as can be appreciated.

In the example system of Fig. 1, the data stored in the data lake 104 is shown as data artifacts 106. A data artifact 106 is a particular instance of some data. The data artifact 106 may include, for example, files, folders, or other data as can be appreciated. In some embodiments, multiple data artifacts 106 are logically related in a hierarchy or grouping. For example, a folder data artifact 106 may include one or more nested data artifacts 106, which themselves may include files or other folders. In some embodiments, a data artifact 106 includes a table such as a table of a relational database. In such embodiments, the table data artifact 106 may be encoded or implemented using one or more nested file data artifacts 106.

In some embodiments, a data artifact 106 includes a shortcut. A shortcut is a particular type of data artifact 106 that references another data artifact 106 stored in the data lake 104. Accessing the shortcut causes the referenced data artifact 106 to be accessed. This may be used, for example, to enable access to particular data artifacts 106 across multiple workspaces or other groupings of data artifacts 106 without creating duplicate copies of those data artifacts 106, reducing overall storage space usage. Other data artifacts 106 are also contemplated within the scope of the present disclosure.

In some embodiments, to facilitate the data analytics operations of the data analytics platform 102, the data analytics platform 102 supports or executes one or more workloads. Each workload may correspond to a particular data analytics engine, an application, process, or service that assists in processing and analyzing large data sets. Here, these workloads may access data artifacts 106 from the data lake to perform their respective functions. In some embodiments, the data analytics platform 102 may execute one or more trusted workloads 108 and/or one or more untrusted workloads 110. The distinction between trusted workloads 108 and untrusted workloads 110 is described in further detail below.

In some embodiments, a client 112 (e.g., a client computing device or user device) interacts with the data analytics platform 102 using one or more applications 114. These applications 114 may access one or more of the workloads by issuing queries or requests to the workloads based on user inputs, presenting data or other output from the workloads, and the like. Accordingly, in some embodiments, these workloads may implement Application Programming Interfaces (APIs) or other interfaces exposed to these applications 114. In some embodiments, a client 112 interacts with the data analytics platform 102 by accessing these exposed APIs or interfaces of the workloads directly.

Access controls implemented in the data analytics platform 102 control what data is accessible to which users. This may be used for various purposes, including preventing access to confidential information, restricting access to certain data to satisfy regulatory requirements, or other purposes as can be appreciated. In some existing implementations, enforcing access controls to data is largely deferred to the analytics engines accessing the data (e.g., the particular workloads of those analytics engines). In these implementations, a user such as an administrator or security team member may define the access controls for each analytics engine. This presents various drawbacks related to security and the overall user experience. For example, as access controls are defined on a per-analytics engine basis, it may be possible for the same user to have different permissions to access the same data across different analytics engines. This may cause a user to have unintended access to some data, presenting possible security concerns, and may cause a user to be presented with different results when trying to access some data set using different analytics engines. Moreover, this requires access controls to be defined multiple times, potentially using different methodologies, further increasing the overall complexity and user burden in creating access controls.

In contrast, the approaches set forth herein define access permissions for data artifacts 106 in the data lake 104 itself. In some embodiments, the data lake 104 stores artifact-level security data 116. Each portion of artifact-level security data 116 defines, for a particular data artifact 106, permissions for accessing the particular data artifact 106. These permissions may include, for example, read access, write access, create access, delete access, or permissions to perform other actions as can be appreciated. In some embodiments, artifact-level security data 116 defines the permissions to access a particular data artifact 106 by members of a particular role. A role is a logical grouping of identities. Such identities may include user identities and/or non-user identities such as service principals. Thus, an identity that is a member of a particular role will have the access permissions for a particular data artifact 106 as defined in the artifact-level security data 116 for that role. In some embodiments, the data lake 104 and/or the data analytics platform 102 implements an API or other interface for creating artifact-level security data 116 for particular data artifacts 106. For example, in some embodiments, this API may include a public API that allows any user, or other identity, with write access to a particular data artifact 106 to create and/or modify artifact-level security data 116 for that data artifact 106. In some embodiments, the data lake 104 and/or the data analytics platform 102 implements an API or other interface for creating roles and/or assigning members to roles.

When a workload attempts to access some data artifact 106 from the data lake 104, the artifact-level security data 116 for that data artifact 106 will be used to determine whether there are sufficient permissions to access that data artifact 106. In some embodiments, the particular approaches for controlling access to data artifacts 106 using artifact-level security data is dependent on whether the workload attempting access is a trusted workload 108 or an untrusted workload 110. A trusted workload 108 is a workload that both accesses data artifacts 106 using a service-to-service token and may implement a multi-user cache to read data artifacts 106 and serve end users (e.g., via applications 114). A service-to-service token is a workload-specific (e.g., analytics engine-specific) authentication credential for accessing the data lake 104, in contrast to a user-specific authentication credential from end users. A multi-user cache stores data artifacts 106 that may be used to service requests from multiple users. An untrusted workload 110 uses neither a service-to-service token nor a multi-user cache.

In some embodiments, in order to service a data access associated with a user of the data analytics platform 102, a user identity 118 is provided to a trusted workload 108 or an untrusted workload 110, depending on the particular workload that will be used to perform the data access. The data access may include some access performed by a workload based on some command, job, request, and the like associated with a user. The user identity 118 is a user-specific authentication credential, such as a token, that specifically identifies the user. In some embodiments, where an untrusted workload 110 performs the data access, the untrusted workload 110 provides the user identity 118 and a request for one or more data artifacts 106 to the data lake 104. The data lake 104 accesses the artifact-level security data 116 for each requested data artifact 106 and data indicating the particular role(s) of which the user is a member. Using the roles of the user and the artifact-level security data 116, the data lake 104 then determines whether the user has permission to access each requested data artifact 106 and provides a response 120 to the untrusted workload 110.

The response 120 may include one or more requested data artifacts 106 and/or one or more indications that the user does not have permissions to access one or more requested data artifacts 106, depending on the particular permissions for the user. In other words, for untrusted workloads 110, the data lake 104 enforces the access controls using the artifact-level security data 116. The untrusted workload 110 may then provide the response 120 or some other output based on the response 120 to an upstream entity such as an application 114 accessed by the user using a client 112.

In some embodiments, an untrusted workload 110 may operate in a delegated identity mode whereby the particular user identity 118 provided to the data lake 104 differs from the user identity 118 provided to the untrusted workload 110. For example, a particular untrusted workload 110 may have a delegated user identity 118 usable by multiple other users. The delegated user identity 118 may be a member of one or more roles of the data lake 104. The untrusted workload 110 may access the data lake 104 using the delegated user identity 118 such that the permissions of the delegated user identity 118 are enforced by the data lake 104 rather than some other user identity 118 interacting with the untrusted workload 110.

In some embodiments, where a trusted workload 108 performs the data access, the trusted workload 108 provides a system identity 122 and a request for one or more data artifacts 106 to the data lake 104. The system identity 122 is an authentication credential, such as a token, that grants the trusted workload 108 access to all data artifacts 106 in the data lake 104. Accordingly, the data lake 104 provides the requested data artifacts 106 and their corresponding artifact-level security data 116 to the trusted workload 108. The trusted workload 108 then enforces the access controls for the requested data artifacts 106 using the corresponding artifact-level security data 116. For example, the trusted workload 108 determines the particular permissions for the user based on the roles of which they are members and the permissions for those roles as defined in the artifact-level security data 116. In some embodiments, the trusted workload 108 may also receive role membership data indicating which users are members of which roles so as to enforce the access controls using the artifact-level security data 116. The trusted workload 108 may then generate some output based on the accessed data and the permissions of the user and provide that output to an upstream entity.

In some embodiments, a trusted workload 108 caches data artifacts 106 and/or artifact-level security data 116, such as in a multi-user cache. In some embodiments, where some data artifact 106 and/or artifact-level security data 116 is stored in cache, that data artifact 106 and/or artifact-level security data 116 is loaded from cache rather than from the data lake 104. In some embodiments, the trusted workload 108 may periodically synchronize artifact-level security data 116 with the data lake 104. This reduces the need for the trusted workload 108 to load artifact-level security data 116 for each data access, improving overall performance. In some embodiments, the trusted workload 108 periodically synchronizes role membership data or other data from the data lake 104.

As is set forth above, in some embodiments, a data artifact 106 may include a shortcut that references some other data artifact 106 in the data lake 104. In some embodiments, artifact-level security data 116 is not defined for these shortcuts. Instead, permissions to access a shortcut may correspond to the permissions to access the referenced data artifact 106. In some embodiments, the shortcut includes a delegated identity shortcut associated with a particular, predefined user identity 118 or non-user identity such as a service principal. In these embodiments, permissions for accessing the delegated identity shortcut correspond to permissions to access the referenced data artifact 106 using this delegated user identity 118. For example, assume user A requests access to a delegated identity shortcut associated with delegated user B and referencing a particular data artifact 106. The permissions to access the delegated identity shortcut by user A will be those permissions to access the particular data artifact 106 by user B as defined in the artifact-level security data 116 for the particular data artifact 106.

In some embodiments, the shortcut includes a passthrough identity shortcut not associated with or assigned a delegated user identity 118. In these embodiments, permissions for accessing the passthrough identity shortcut correspond to the permissions to access the referenced data artifact 106 by the user accessing the passthrough identity shortcut. For example, assume user A requests access to a passthrough identity shortcut referencing a particular data artifact 106. The permissions to access the passthrough identity shortcut by user A will be those permissions to access the particular data artifact 106 by user A as defined in the artifact-level security data 116 for the particular data artifact 106.

In some embodiments, workloads may include their own security models and access controls for data artifacts 106 in the data lake 104. In these embodiments, workloads must first enforce artifact-level security data 116 for some data artifact 106 as a baseline before further limiting access through its own permissions. In other words, in some embodiments, workloads cannot apply workload-specific security that would broaden access beyond that which is granted by artifact-level security data 116.

In some embodiments, nested data artifacts 106 may have different permissions assigned for a given role. Accordingly, when accessing a particular data artifact 106 having nested data artifacts 106, the permissions for accessing the particular data artifact 106 is determined as the permissions of the highest-level data artifact 106 in a hierarchy of data artifacts 106. For example, assume data artifacts 106 A, B, and C, with B being nested in A and C being nested in B (e.g., an A->B->C hierarchy). In this example, the permissions to access data artifact 106 C using a given role will be the permissions to access data artifact 106 A using the given role. These calculated permissions for a particular data artifact 106 and role are hereinafter referred to as "role-effective permissions." Where a data artifact 106 has no nested data artifacts 106, the role-effective permissions for that data artifact 106 and role are the permissions assigned to that data artifact 106 in its artifact-level security data 116 or inherited from some higher-level data artifact 106.

In some embodiments, an identity (e.g., a user) is included in multiple roles. This may result in different roles of the same identity granting different permissions for the same for the same data artifact 106. Accordingly, in some embodiments, where an identity is a member of multiple roles having assigned permissions for a data artifact 106, the calculated permissions for that data artifact 106 are the union between the role-effective permissions for each role. In other words, the calculated permissions are the combined permitted actions across all role-effective permissions. For example, assume a user that is a member of roles A and B. Further assume that, for a data artifact 106, role A has role-effective permissions of "write" and role B has role-effective permissions of "none" (e.g., no permission to access). In this example, the calculated permissions for the user to access the data artifact 106 is "write."

Readers will appreciate that the approaches set forth herein enable access control to data artifacts 106 stored in a data lake 104 using artifact-level security data 116 maintained in the data lake 104 itself. This allows for the data lake 104 or trusted workloads 108 to enforce permissions for data artifacts 106 consistently across all workloads, improving overall system utility. Although the examples set forth herein are described in the context of a data analytics platform 102 and a data lake 104, readers will appreciate that the approaches set forth herein are applicable to any computing platform whereby multiple workloads can access the same data repository. Moreover, although the examples set forth herein are largely described in the context of accessing (e.g., reading) data from the data lake 104, the approaches set forth herein are also applicable for determining permissions to perform other actions with respect to stored data artifacts 106.

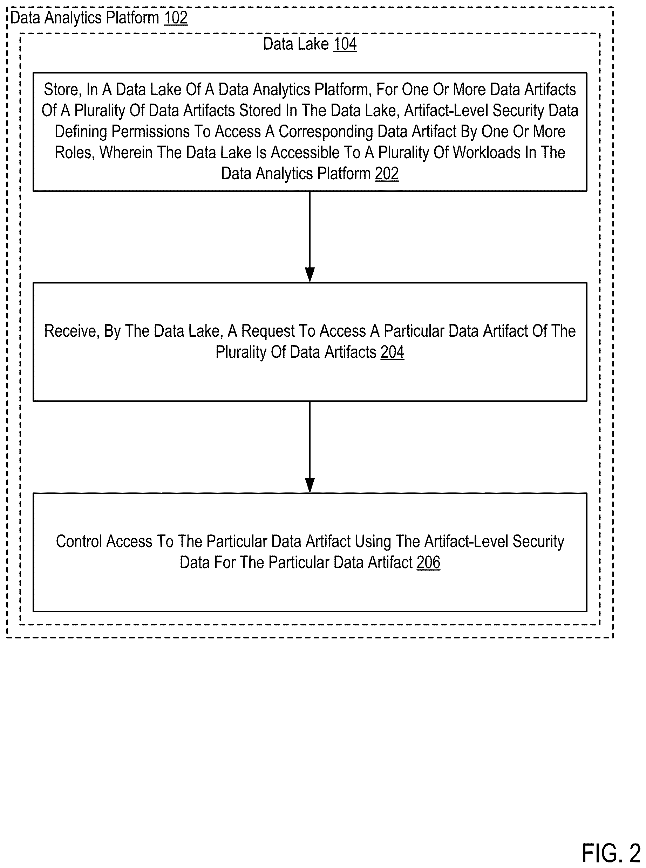

For further explanation, Fig. 2 sets forth a flowchart of an example method of securing a data lake using artifact-level security in accordance with some embodiments of the present disclosure. The method of Fig. 2 may be performed, for example, by a data lake 104 in a data analytics platform 102. The method of Fig. 2 includes storing 202, in a data lake 104 of a data analytics platform 102, for one or more data artifacts 106 of a plurality of data artifacts 106 stored in the data lake 104, artifact-level security data 116 defining permissions to access a corresponding data artifact 106 by one or more roles, wherein the data lake 104 is accessible to a plurality of workloads in the data analytics platform 102. As is set forth above, the data analytics platform 102 is a computing platform for analyzing data sets stored as data artifacts 106 in a data lake 104. These data artifacts 106 may include, for example, structured data, unstructured data, semi-structured data, and the like, as well as shortcuts referencing other data artifacts 106.

Each portion of artifact-level security data 116 defines permissions for a corresponding data artifact 106. Particularly, in some embodiments, artifact-level security data 116 defines actions that can or cannot be performed by identities (e.g., users or other identities) that are members of an identified role. In some embodiments, storing 202 the artifact-level security data 116 includes receiving API calls or other commands describing artifact-level security data 116 to be stored 202. In some embodiments, this API is accessible such that any identity with sufficient access to a particular data artifact 106 can create and/or modify artifact-level security data 116 for that data artifact 106.

The method of Fig. 2 also includes receiving 204, by the data lake 104, a request to access a particular data artifact 106 of the plurality of data artifacts 106. In some embodiments, the request to access the particular data artifact 106 includes a request from a particular workload of the data analytics platform 102. For example, user interactions with an application 114 interfacing with the workload may cause the workload to request one or more data artifacts 106 from the data lake 104 to perform some task or operation. In some embodiments, the request to access the particular data artifact 106 includes an API call issued to the data lake 104 to access the particular data artifact 106.

The method of Fig. 2 also includes controlling 206 access to the particular data artifact 106 using the artifact-level security data 116 for the particular data artifact 106. In some embodiments, the artifact-level security data 116 for the particular data artifact 106 includes artifact-level security data 116 indicating specific permissions for the particular data artifact 106. In some embodiments, the artifact-level security data 116 for the particular data artifact 106 includes artifact-level security data 116 indicating permissions for other data artifacts 106 nested in the particular data artifact 106. In some embodiments, the artifact-level security data 116 for the particular data artifact 106 includes artifact-level security data 116 of higher-level data artifacts 106 in which the particular data artifact 106 is nested.

Particularly, the permissions used in controlling 206 access to the particular data artifact 106 are those permissions based on one or more roles of an identity associated with the received 204 request. This identity may include, for example, an identity (e.g., a user identity 118) received from an untrusted workload 110 or an identity provided to a trusted workload 108 that provided the request. Particular approaches for controlling 206 access to the particular data artifact 106 are described in further detail below in subsequent flowcharts.

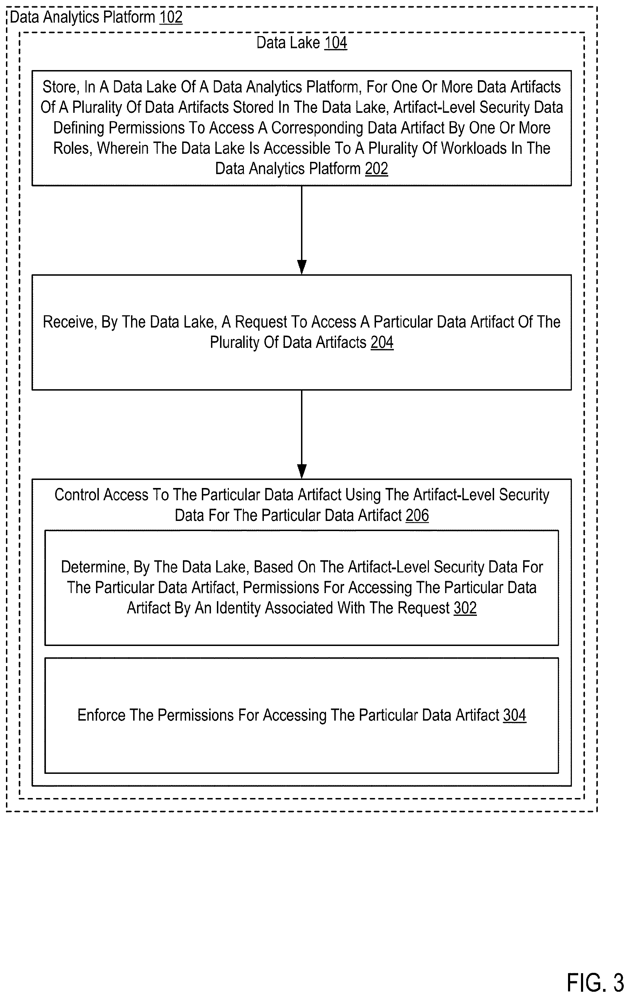

For further explanation, Fig. 3 sets forth a flowchart of another example method of securing a data lake using artifact-level security in accordance with some embodiments of the present disclosure. In the method of Fig. 3, controlling 206 access to the particular data artifact 106 using the artifact-level security data for the particular data artifact 106 also includes determining 302, by the data lake 104, based on the artifact-level security data 116 for the particular data artifact 106, permissions for accessing the particular data artifact 106 by an identity associated with the request. In some embodiments, the request includes or otherwise is associated with an identity. In Fig. 3, assume that the request was received from an untrusted workload 110 and that the identity is a user identity 118 of a user interacting with the untrusted workload 110, either directly or indirectly through some application 114.

Accordingly, in some embodiments, determining 302, by the data lake 104, based on the artifact-level security data 116 for the particular data artifact 106, permissions for accessing the particular data artifact 106 by an identity associated with the request includes accessing role membership data indicating the particular role or roles of which the user is a member. Those roles are then compared to the role-specific permissions indicated in the artifact-level security data 116 of the particular data artifact 106. In some embodiments, these permissions serve as the role-effective permissions for the particular data artifact 106. In some embodiments, these permissions are used to calculate role-effective permissions for the particular data artifact 106 as a function of permissions for other data artifacts 106 nested in the particular data artifact 106 as described above. In some embodiments, as will be described in further detail below, the role-effective permissions for each role of the user applicable to the particular data artifact 106 are used to determine the permissions to access the particular data artifact 106.

In the method of Fig. 3, controlling 206 access to the particular data artifact 106 using the artifact-level security data for the particular data artifact 106 also includes enforcing 304 permissions for accessing the particular data artifact 106. For example, where these permissions indicate that the identity has permission to access the data artifact 106, the data lake 104 returns the data artifact 106 in response to the request. As another example, where these permissions indicate that the identity does not have permission to access the data artifact 106, the data lake 104 returns an error or some other response instead of the restricted data artifact 106.

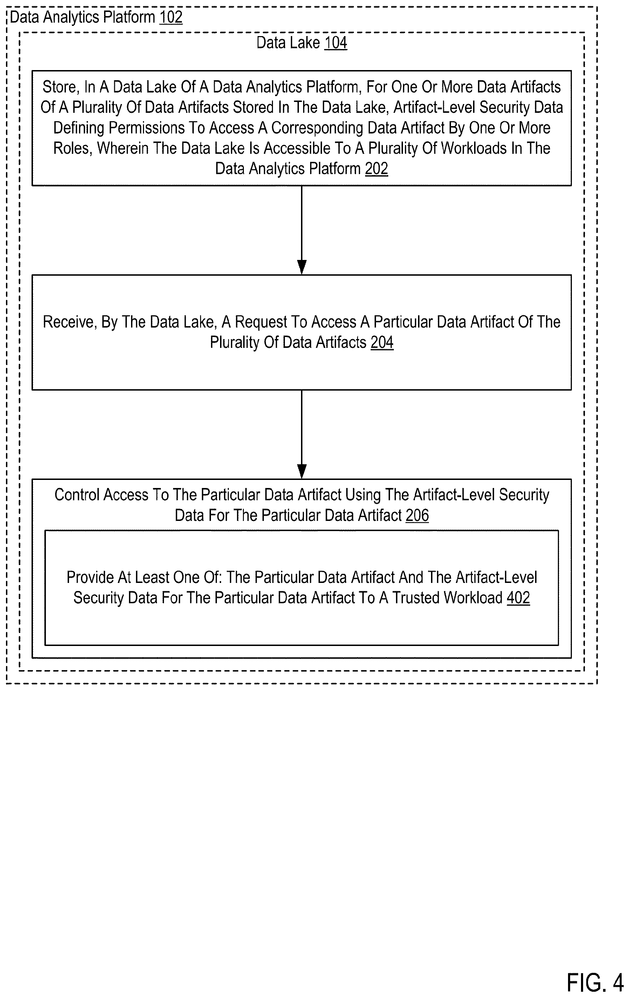

For further explanation, Fig. 4 sets forth a flowchart of another example method of securing a data lake using artifact-level security in accordance with some embodiments of the present disclosure. In the method of Fig. 4, controlling 206 access to the particular data artifact 106 using the artifact-level security data for the particular data artifact 106 also includes providing 402 at least one of: the particular data artifact 106 and the artifact-level security data 116 for the particular data artifact 106 to a trusted workload 108. In the method of Fig. 4, assume that the data lake 104 received 204 the request for the particular data artifact 106 from a trusted workload 108. For example, in some embodiments, the data lake 104 determines that the request was received 204 from a trusted workload 108 in response to receiving a system identity 122 granting access to all data artifacts 106 in the data lake 104. Accordingly, rather than enforce permissions for the particular data artifact 106, the data lake 104 instead defers enforcement of these permissions to the trusted workload 108.

In some embodiments, to facilitate enforcement of permissions for the particular data artifact 106, the data lake 104 provides 402 the data artifact 106 to the trusted workload 108. In some embodiments, where the trusted workload 108 has access to a cached copy of the data artifact 106, the trusted workload 108 need not access the data artifact 106 from the data lake 104. In some embodiments, such as where the trusted workload 108 does not have a recent version of artifact-level security data 116 for the particular data artifact 106, the data lake 104 provides this artifact-level security data 116 to the trusted workload 108. In some embodiments, the data lake 104 provides role membership data, thereby allowing the trusted workload 108 to determine of which roles an identity associated with the request is a member.

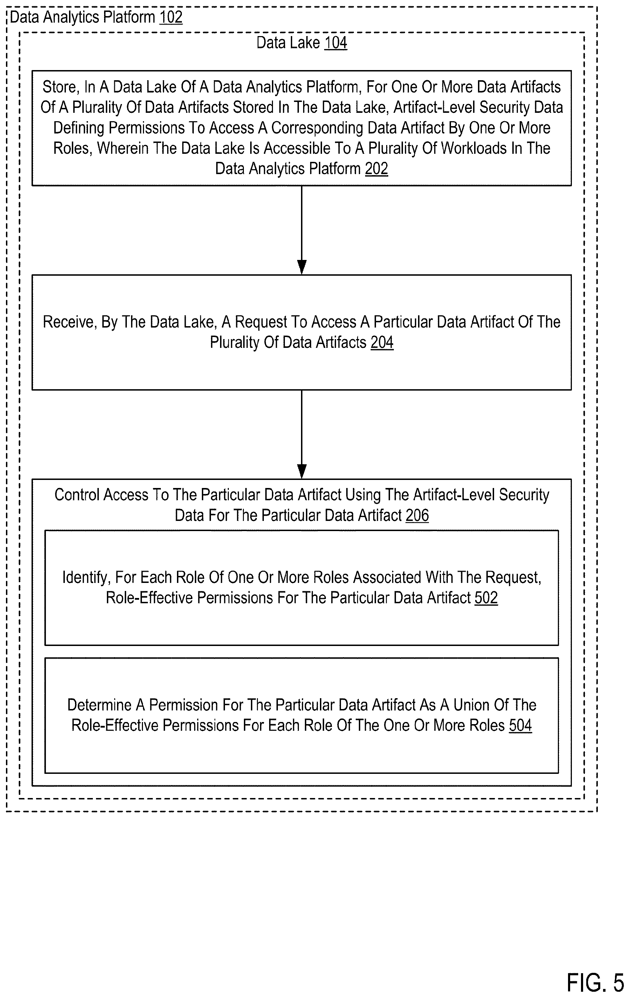

For further explanation, Fig. 5 sets forth a flowchart of another example method of securing a data lake using artifact-level security in accordance with some embodiments of the present disclosure. In the method of Fig. 5, controlling 206 access to the particular data artifact 106 using the artifact-level security data for the particular data artifact 106 also includes identifying 502, for each role of one or more roles associated with the request, role-effective permissions for the particular data artifact 106. Role-effective permissions for a particular data artifact are the permissions granted to a particular role for accessing the particular data artifact 106. In some embodiments, the role-effective permissions for a particular data artifact 106 and role are permissions explicitly granted to that role in the artifact-level security data 116 for that data artifact 106. In some embodiments, where no permissions are specifically assigned to that role and data artifact 106, the role-effective permissions for a particular data artifact 106 may include those permissions granted to that role for a higher-level data artifact 106 in which the particular data artifact 106 is nested.

In the method of Fig. 5, controlling 206 access to the particular data artifact 106 using the artifact-level security data for the particular data artifact 106 also includes determining 504 a permission for the particular data artifact 106 as a union of the role-effective permission for each role of the one or more roles. Where the identity is a member of multiple roles applicable to the particular data artifact 106 the determined 504 permission is the union of the role-effective permissions for each role as described above. In other words, the determined 504 permission is the combined set of allowable actions for the particular data artifact 106 across the role-effective permissions for all roles. Where the identity is a member of a single role applicable to particular data artifact 106 the determined 504 permission is the role-effective permission for that single role.

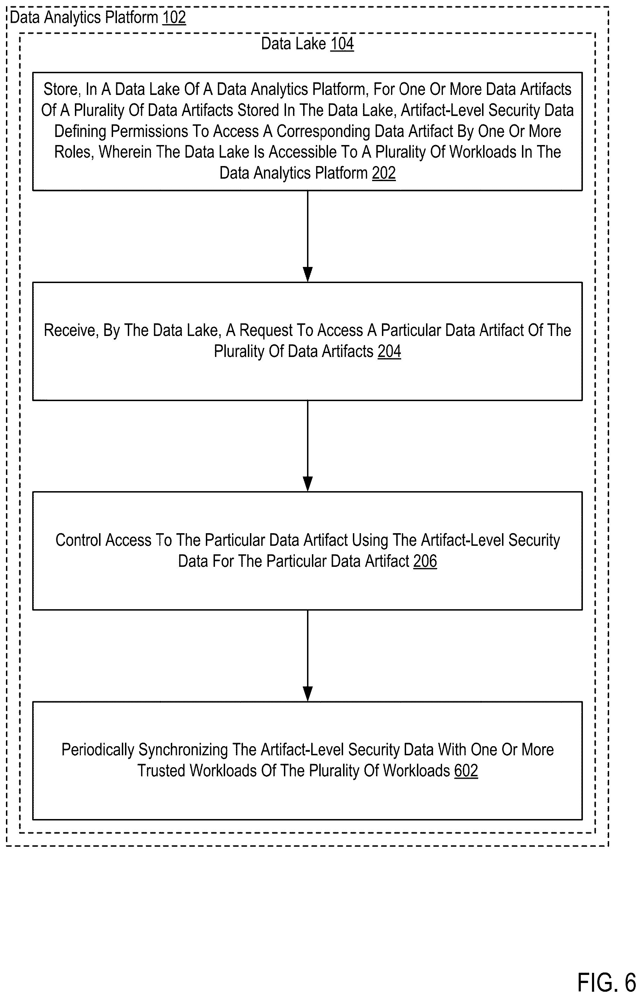

For further explanation, Fig. 6 sets forth a flowchart of another example method of securing a data lake using artifact-level security in accordance with some embodiments of the present disclosure. The method of Fig. 6 also includes periodically synchronizing 602 the artifact-level security data 116 with one or more trusted workloads 108 of the plurality of workloads. As is set forth above, in some embodiments, trusted workloads 108 enforce permissions to access data artifacts 106 rather than the data lake 104. To do so, the trusted workloads 108 require some amount of artifact-level security data 116. Where the trusted workload 108 does not have access to some required artifact-level security data 116 in cache or other memory external to the data lake 104 the trusted workload 108 must access that artifact-level security data 116 from the data lake 104.

Accessing artifact-level security data 116 from the data lake 104 in response to some request or query increases the amount of time to service that request or query, thereby increasing overall system latency. Instead, in some embodiments, the trusted workload 108 maintains artifact-level security data 116 external to the data lake 104. The trusted workload 108 periodically synchronizes 602 this artifact-level security data 116 so as to have access to the most recent version possible, reducing on-demand access of artifact-level security data 116 from the data lake 104, improving overall performance.

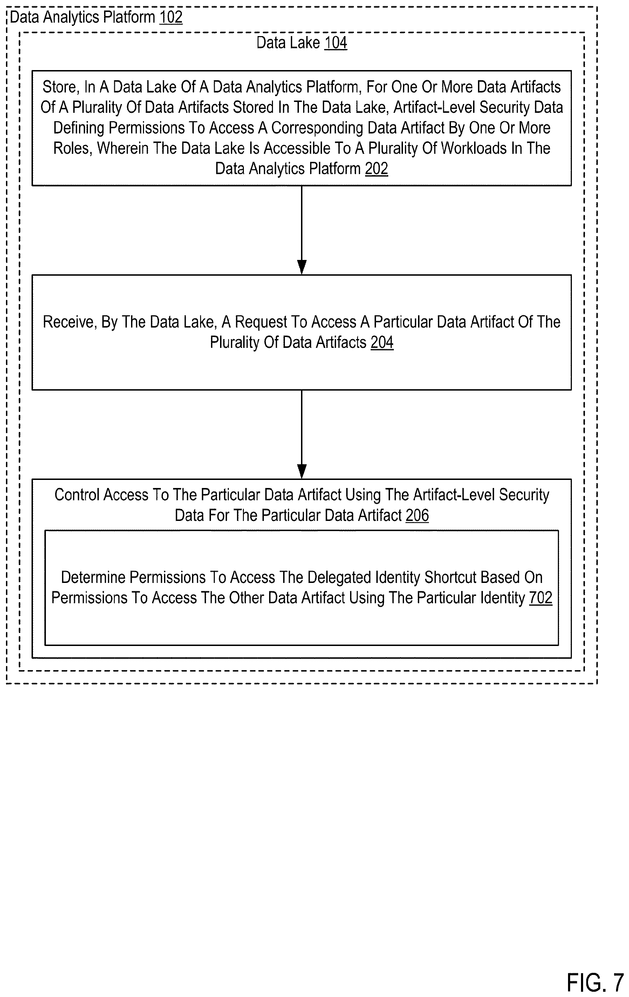

For further explanation, Fig. 7 sets forth a flowchart of another example method of securing a data lake using artifact-level security in accordance with some embodiments of the present disclosure. In the example method of Fig. 7, assume that the particular data artifact 106 is a delegated identity shortcut referencing another data artifact and associated with a particular, delegated identity. The method of Fig. 7 also includes determining 702 permissions to access the delegated identity shortcut based on permissions to access the other data artifact 106 using the particular identity. In some embodiments, permissions for accessing the delegated identity shortcut correspond to permissions to access the referenced data artifact 106 using this particular identity. For example, assume user A requests access to a delegated identity shortcut associated with delegated user B and referencing a particular data artifact 106. The permissions to access the delegated identity shortcut by user A will be those permissions to access the particular data artifact 106 by user B as defined in the artifact-level security data 116 for the particular data artifact 106.

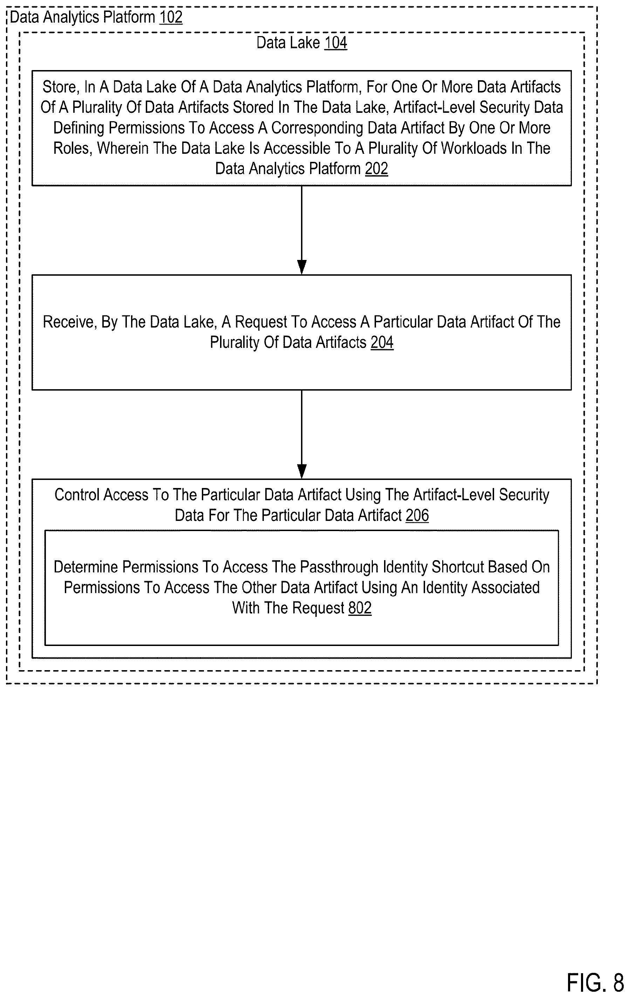

For further explanation, Fig. 8 sets forth a flowchart of another example method of securing a data lake using artifact-level security in accordance with some embodiments of the present disclosure. In the example method of Fig. 8, assume that the particular data artifact 106 is a passthrough identity shortcut referencing another data artifact and not associated with any particular, delegated identity. The method of Fig. 8 also includes determining 802 permissions to access the passthrough identity shortcut based on permissions to access the other data artifact 106 using an identity associated with the request. In some embodiments, permissions for accessing the passthrough identity shortcut correspond to the permissions to access the referenced data artifact 106 by the user accessing the passthrough identity shortcut. For example, assume user A requests access to a passthrough identity shortcut referencing a particular data artifact 106. The permissions to access the passthrough identity shortcut by user A will be those permissions to access the particular data artifact 106 by user A as defined in the artifact-level security data 116 for the particular data artifact 106.

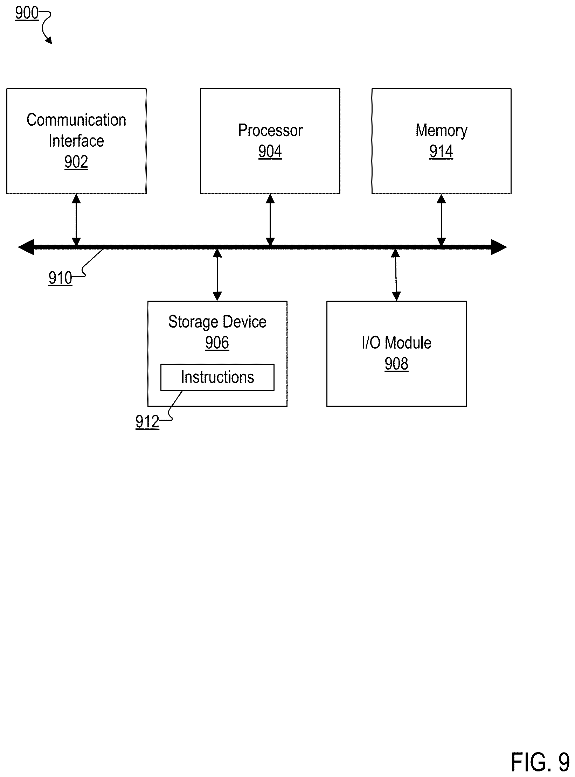

For further explanation, Fig. 9 illustrates an exemplary computing device 900 that may be specifically configured to perform one or more of the processes described herein. As shown in Fig. 9, computing device 900 may include a communication interface 902, a processor 904, a storage device 906, an input/output (I/O) module 908, and computer memory 914 communicatively connected one to another via a communication infrastructure 910. While an exemplary computing device 900 is shown in Fig. 9, the components illustrated in Fig. 9 are not intended to be limiting. Additional or alternative components may be used in other embodiments. Components of computing device 900 shown in Fig. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data and/or interpreting, executing, and/or directing execution of one or more of the instructions, processes, and/or operations described herein. Processor 904 may perform operations by executing computer-executable instructions 912 (e.g., an application, software, code, and/or other executable data instance) stored in storage device 906.

Storage device 906 may include one or more data storage media, devices, or configurations and may employ any type, form, and combination of data storage media and/or device. For example, storage device 906 may include, but is not limited to, any combination of non-volatile media and/or volatile media. Electronic data, including data described herein, may be temporarily and/or permanently stored in storage device 906. For example, data representative of computer-executable instructions 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 900.

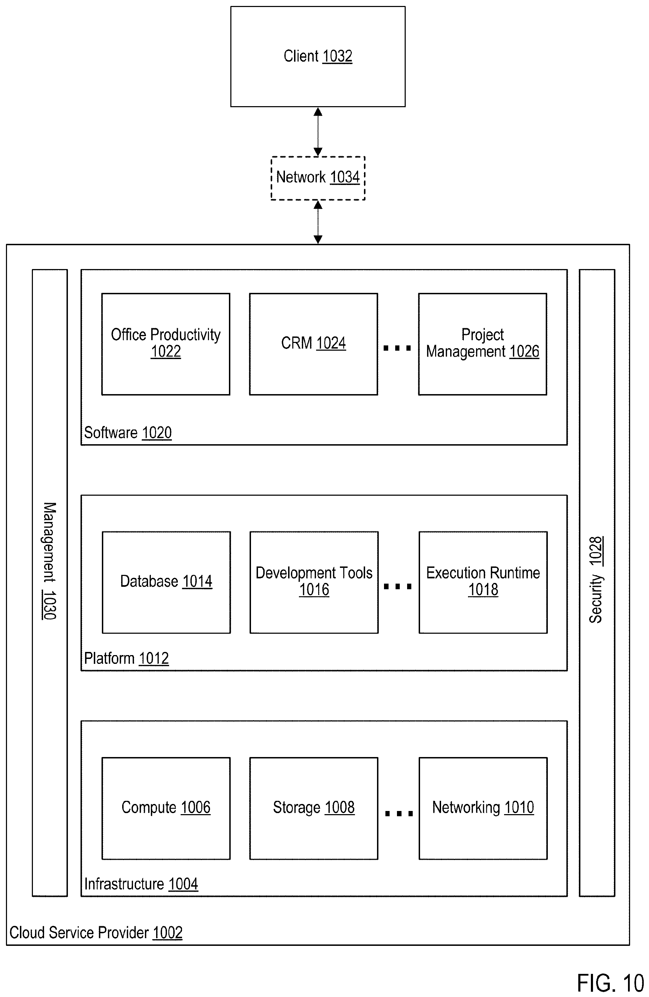

For further explanation and as an additional example of a supporting technology for [PREAMBLE], Fig. 10 sets forth a block diagram of a cloud service provider service architecture in accordance with some embodiments. The cloud service provider 1002 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 10, the cloud service provider 1002 is accessed from a client device 1034 via a network 1032.

Fig. 10 depicts an embodiment where software 1020 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 10, as examples of software 1020 that can be delivered as-a-service, the illustrated embodiment includes office productivity 1022 software, customer relationship management ('CRM') 1024 software, and project management 1026 software. The office productivity 1022 software can include applications designed to facilitate common business and personal tasks, including word processing applications, applications for spreadsheet creation, presentation design applications, and many others. The CRM 1024 software can include applications for managing a business organization's relationships and interactions with customers and potential customers. The project management 1026 software can include applications designed to help teams plan, organize, and manage projects efficiently by facilitating collaboration and tracking the progress of projects. Readers will appreciate that in other embodiments, other types of software may be delivered using a SaaS model.

Fig. 10 depicts an embodiment where platforms 1012 can be delivered as a service. Platform-as-a-service ('PaaS') is a model that provides cloud customers with platform resources that they can use to develop, run, and manage applications without the complexity of such deploying and managing such infrastructure on their own. In Fig. 10, as examples of platform 1012 resources that can be delivered as-a-service, the illustrated embodiment includes database 1014 services, development tools 1016 services, and execution runtime 1018 services. The database 1014 services can be used to provide access to databases without management overhead for the user as the cloud service provider manages the provisioning, scaling, and maintenance of the databases. The development tools 1016 services can provide developers with tools to design, develop, test, and deploy applications without needing to manage the underlying infrastructure. The execution runtime 1018 services can provide environments where applications or other forms of computer program code can be executed, including services to scale the execution environment. Readers will appreciate that in other embodiments, other platform resources may be delivered using a PaaS model.

Fig. 10 depicts an embodiment where infrastructure 1004 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 10, as examples of infrastructure 1004 resources that can be delivered as-a-service, the illustrated embodiment includes compute 1006 services, storage 1008 services, and networking 1010 services. The compute 1006 services can be used to provide on-demand access to computational resources such as VMs, containers, and serverless functions, where the cloud service provider manages the provisioning, scaling, and maintenance of such resources. The storage 1008 services can provide storage resources that can be used to store and access data, without the need for customers to purchase and manage on-premises physical storage resources. The networking 1010 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 10 also provides management 1030 resources. The management 1030 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 10 also provides security 1028 resources. The security 1028 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Methods, apparatuses, and products for securing a data lake using artifact-level security, including: storing, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receiving, by the data lake, a request to access a particular data artifact of the plurality of data artifacts; and controlling access to the particular data artifact using the artifact-level security data for the particular data artifact.

Advantages and features of the present disclosure can be further described by the following statements:
1. A method of securing a data lake using artifact-level security, comprising: storing, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receiving, by the data lake, a request to access a particular data artifact of the plurality of data artifacts; and controlling access to the particular data artifact using the artifact-level security data for the particular data artifact.
2. The method of statement 1, wherein the request is associated with an untrusted workload of the plurality of workloads and wherein controlling access to the particular data artifact comprises: determining, by the data lake, based on the artifact-level security data for the particular data artifact, permissions for accessing the particular data artifact by an identity associated with the request; and enforcing the permissions for accessing the particular data artifact.
3. The method of statements 1 or 2, wherein the request is associated with a trusted workload of the plurality of workloads and wherein controlling access to the particular data artifact comprises providing at least one of: the particular data artifact and the artifact-level security data for the particular data artifact to the trusted workload, wherein the trusted workload is configured to enforce permissions for accessing the particular data artifact based on the artifact-level security data for the particular data artifact.
4. The method of any combination of one or more of statements 1-3, wherein controlling access to the particular data artifact comprises: identifying, for each role of one or more roles associated with the request, role-effective permissions for the particular data artifact; and determining a permission for the particular data artifact as a union of the role-effective permissions for each role of the one or more roles.
5. The method of any combination of one or more of statements 1-4, further comprising periodically synchronizing the artifact-level security data with one or more trusted workloads of the plurality of workloads.
6. The method of any combination of one or more of statements 1-5, wherein the particular data artifact comprises a delegated identity shortcut associated with a particular identity and referencing another data artifact, and wherein controlling access to the particular data artifact comprises determining permissions to access the delegated identity shortcut based on permissions to access the other data artifact using the particular identity.
7. The method of any combination of one or more of statements 1-6, wherein the particular data artifact comprises a passthrough identity shortcut and referencing another data artifact, and wherein controlling access to the particular data artifact comprises determining permissions to access the passthrough identity shortcut based on permissions to access the other data artifact using an identity associated with the request.
8. An apparatus for securing a data lake using artifact-level security, comprising: a memory; and one or more processing devices, operatively coupled to the memory, the one or more processing devices configured to: store, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receive, by the data lake, a request to access a particular data artifact of the plurality of data artifacts; and control access to the particular data artifact using the artifact-level security data for the particular data artifact.
9. The apparatus of statement 8, wherein the request is associated with an untrusted workload of the plurality of workloads and wherein, to control access to the particular data artifact, the one or more processing devices are further configured to: determine, by the data lake, based on the artifact-level security data for the particular data artifact, permissions for accessing the particular data artifact by an identity associated with the request; and enforce the permissions for accessing the particular data artifact.
10. The apparatus of statements 8 or 9, wherein the request is associated with a trusted workload of the plurality of workloads and wherein, to control access to the particular data artifact, the one or more processing devices are further configured to provide at least one of: the particular data artifact and the artifact-level security data for the particular data artifact to the trusted workload, wherein the trusted workload is configured to enforce permissions for accessing the particular data artifact based on the artifact-level security data for the particular data artifact.
11. The apparatus of any combination of one or more of statements 8-10, wherein, to control access to the particular data artifact, the one or more processing devices are further configured to: identify for each role of one or more roles associated with the request, role-effective permissions for the particular data artifact; and determine a permission for the particular data artifact as a union of the role-effective permissions for each role of the one or more roles.
12. The apparatus of any combination of one or more of statements 8-11, wherein the one or more processing devices are further configured to periodically synchronize the artifact-level security data with one or more trusted workloads of the plurality of workloads.
13. The apparatus of any combination of one or more of statements 8-12, wherein the particular data artifact comprises a delegated identity shortcut associated with a particular identity and referencing another data artifact, and wherein, to control access to the particular data artifact, the one or more processing devices are further configured to determine permissions to access the delegated identity shortcut based on permissions to access the other data artifact using the particular identity.
14. The apparatus of any combination of one or more of statements 8-13, wherein the particular data artifact comprises a passthrough identity shortcut and referencing another data artifact, and wherein, to control access to the particular data artifact, the one or more processing devices are further configured to determine permissions to access the passthrough identity shortcut based on permissions to access the other data artifact using an identity associated with the request.
15. A non-transitory computer readable storage medium storing instructions which, when executed, cause a processing device to: store, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform; receive, by the data lake, a request to access a particular data artifact of the plurality of data artifacts; and control access to the particular data artifact using the artifact-level security data for the particular data artifact.
16. The non-transitory computer readable storage medium of statement 15, wherein the request is associated with an untrusted workload of the plurality of workloads and wherein, to control access to the particular data artifact, the instructions, when executed, cause the processing device to: determine, by the data lake, based on the artifact-level security data for the particular data artifact, permissions for accessing the particular data artifact by an identity associated with the request; and enforce the permissions for accessing the particular data artifact.
17. The non-transitory computer readable storage medium of statements 15 or 16, wherein the request is associated with a trusted workload of the plurality of workloads and wherein, to control access to the particular data artifact, the instructions, when executed, cause the processing device to provide at least one of: the particular data artifact and the artifact-level security data for the particular data artifact to the trusted workload, wherein the trusted workload is configured to enforce permissions for accessing the particular data artifact based on the artifact-level security data for the particular data artifact.
18. The non-transitory computer readable storage medium of any combination of one or more of statements 15-17, wherein, to control access to the particular data artifact, the instructions, when executed, cause the processing device to: identify for each role of one or more roles associated with the request, role-effective permissions for the particular data artifact; and determine a permission for the particular data artifact as a union of the role-effective permissions for each role of the one or more roles.
19. The non-transitory computer readable storage medium of any combination of one or more of statements 15-18, wherein the instructions, when executed, further cause the processing device to periodically synchronize the artifact-level security data with one or more trusted workloads of the plurality of workloads.
20. The non-transitory computer readable storage medium of any combination of one or more of statements 15-19, wherein the particular data artifact comprises a delegated identity shortcut associated with a particular identity and referencing another data artifact, and wherein, to control access to the particular data artifact, the instructions, when executed, further cause the processing device to determine permissions to access the delegated identity shortcut based on permissions to access the other data artifact using the particular identity.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of securing a data lake using artifact-level security, comprising:
storing, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform;
receiving, by the data lake, a request to access a particular data artifact of the plurality of data artifacts; and
controlling access to the particular data artifact using the artifact-level security data for the particular data artifact.

2. The method of claim 1, wherein the request is associated with an untrusted workload of the plurality of workloads and wherein controlling access to the particular data artifact comprises:
determining, by the data lake, based on the artifact-level security data for the particular data artifact, permissions for accessing the particular data artifact by an identity associated with the request; and
enforcing the permissions for accessing the particular data artifact.

3. The method of claims 1 or 2, wherein the request is associated with a trusted workload of the plurality of workloads and wherein controlling access to the particular data artifact comprises providing at least one of: the particular data artifact and the artifact-level security data for the particular data artifact to the trusted workload, wherein the trusted workload is configured to enforce permissions for accessing the particular data artifact based on the artifact-level security data for the particular data artifact.

4. The method of any of claims 1 to 3, wherein controlling access to the particular data artifact comprises:
identifying, for each role of one or more roles associated with the request, role-effective permissions for the particular data artifact; and
determining a permission for the particular data artifact as a union of the role-effective permissions for each role of the one or more roles.

5. The method of any of claims 1 to 4, further comprising periodically synchronizing the artifact-level security data with one or more trusted workloads of the plurality of workloads.

6. The method of any of claims 1 to 5, wherein the particular data artifact comprises a delegated identity shortcut associated with a particular identity and referencing an other data artifact, and wherein controlling access to the particular data artifact comprises determining permissions to access the delegated identity shortcut based on permissions to access the other data artifact using the particular identity.

7. The method of any of claims 1 to 6, wherein the particular data artifact comprises a passthrough identity shortcut and referencing an other data artifact, and wherein controlling access to the particular data artifact comprises determining permissions to access the passthrough identity shortcut based on permissions to access the other data artifact using an identity associated with the request.

8. An apparatus for securing a data lake using artifact-level security, comprising:
a memory; and
one or more processing devices, operatively coupled to the memory, the one or more processing devices configured to:
store, in a data lake of a data analytics platform, for one or more data artifacts of a plurality of data artifacts stored in the data lake, artifact-level security data defining permissions to access a corresponding data artifact by one or more roles, wherein the data lake is accessible to a plurality of workloads in the data analytics platform;
receive, by the data lake, a request to access a particular data artifact of the plurality of data artifacts; and
control access to the particular data artifact using the artifact-level security data for the particular data artifact.

9. The apparatus of claim 8, wherein the request is associated with an untrusted workload of the plurality of workloads and wherein, to control access to the particular data artifact, the one or more processing devices are further configured to:
determine, by the data lake, based on the artifact-level security data for the particular data artifact, permissions for accessing the particular data artifact by an identity associated with the request; and
enforce the permissions for accessing the particular data artifact.

10. The apparatus of claims 8 or 9, wherein the request is associated with a trusted workload of the plurality of workloads and wherein, to control access to the particular data artifact, the one or more processing devices are further configured to provide at least one of: the particular data artifact and the artifact-level security data for the particular data artifact to the trusted workload, wherein the trusted workload is configured to enforce permissions for accessing the particular data artifact based on the artifact-level security data for the particular data artifact.

11. The apparatus of any of claims 8 to 10, wherein, to control access to the particular data artifact, the one or more processing devices are further configured to:
identify, for each role of one or more roles associated with the request, role-effective permissions for the particular data artifact; and
determine a permission for the particular data artifact as a union of the role-effective permissions for each role of the one or more roles.

12. The apparatus of any of claims 8 to 11, wherein the one or more processing devices are further configured to periodically synchronize the artifact-level security data with one or more trusted workloads of the plurality of workloads.

13. The apparatus of any of claims 8 to 12, wherein the particular data artifact comprises a delegated identity shortcut associated with a particular identity and referencing an other data artifact, and wherein, to control access to the particular data artifact, the one or more processing devices are further configured to determine permissions to access the delegated identity shortcut based on permissions to access the other data artifact using the particular identity.

14. The apparatus of any of claims 8 to 13, wherein the particular data artifact comprises a passthrough identity shortcut and referencing an other data artifact, and wherein, to control access to the particular data artifact, the one or more processing devices are further configured to determine permissions to access the passthrough identity shortcut based on permissions to access the other data artifact using an identity associated with the request.

15. A non-transitory computer readable storage medium storing instructions which, when executed, cause a processing device to perform a method in accordance with any of claims 1 to 7.
